# EUROPEAN PATENT APPLICATION

(11) **EP 4 716 354 A1**
(43) Date of publication of application: **25.03.2026**
(21) Application number: 24810242.8
(22) Date of filing: 13.05.2024
(51) Int. Cl.: H04W 74/08

(54) **METHOD AND APPARATUS USED IN NODE FOR WIRELESS COMMUNICATION**

(30) Priority: 19.05.2023 CN 202310572209
(71) Applicant: Apogee Networks, LLC, Plano, TX 75024 (US)
(72) Inventor: HU, Yang, Shanghai 201206 (CN); ZHANG, Xiaobo, Shanghai 201206 (CN)
(74) Representative: Gunzelmann, Rainer
(86) International application number: PCT/CN2024/092762
(87) International publication number: WO 2024/239995

(57) **Abstract**

Disclosed in the present application are a method and apparatus used in a node for wireless communication. The apparatus comprises: a first receiver, which receives first RRC signaling and a first information block, wherein the symbol type corresponding to at least one symbol other than the symbol indicated as an uplink symbol by the first RRC signaling depends on the first information block; and a first transmitter, which sends a first random access preamble in each of a plurality of PRACH occasions, wherein all of the plurality of PRACH occasions only occupy symbols of the same symbol type among various symbol types in a time domain, the various symbol types at least comprise a first symbol type, and at least one symbol of the first symbol type is indicated by the first RRC signaling as a downlink symbol, but can be used for uplink transmission.

## Description

### Technical Field

The present application relates to a transmission method and apparatus in a wireless communication system, in particular to a transmission method and apparatus for wireless signals in a wireless communication system supporting a cellular network.

### Background Art

Sending random access preambles by using a plurality of PRACH (Physical Random Access Channel) occasions is an effective means to improve uplink coverage.

### Summary of the Invention

When symbols of various symbol types are configured, how to specify the symbols occupied by the plurality of PRACHs in a time domain is a key issue that must be addressed; and the present application discloses a solution for the above problem. The present application can be applied to various wireless communication scenarios, such as scenarios supporting full-duplex communication, scenarios only supporting half-duplex communication, eMBB (Enhanced Mobile Broadband), URLLCs (Ultra-Reliable Low-Latency Communications), Internet of Vehicles, Internet of Things, NTNs (Non-Terrestrial Networks), etc., and achieves similar technical effects. In addition, using a unified solution for different scenarios (including but not limited to scenarios supporting full-duplex communications, scenarios only supporting half-duplex communications, eMBB, URLLCs, Internet of Vehicles, Internet of Things, and NTNs) also helps reduce hardware complexity and costs, or improve performance. In the absence of conflicts, embodiments and features in the embodiments in any node of the present application can be applied to any other nodes. In the absence of conflicts, embodiments and features in the embodiments of the present application can be arbitrarily combined with each other.

As one embodiment, the interpretation of the terminologies in the present application refers to definitions of TS36 series of a standard protocol of 3GPP.

As one embodiment, the interpretation of the terminologies in the present application refers to definitions of TS38 series of the standard protocol of 3GPP.

As one embodiment, the interpretation of the terminologies in the present application refers to definitions of TS37 series of the standard protocol of 3GPP.

As one embodiment, the interpretation of the terminologies in the present application refers to definitions of a standard protocol of the IEEE (Institute of Electrical and Electronics Engineers).

The present application discloses a method used in a first node for wireless communication, characterized by comprising:
receiving first RRC signaling and a first information block, wherein a symbol type corresponding to at least one symbol other than a symbol indicated as an uplink symbol by the first RRC signaling depends on the first information block; and
sending a first random access preamble in each of a plurality of PRACH occasions,
wherein all of the plurality of PRACH occasions only occupy symbols of the same symbol type among various symbol types in a time domain, the various symbol types at least comprise a first symbol type, and at least one symbol of the first symbol type is indicated by the first RRC signaling as a downlink symbol, but can be used for uplink transmission.

As one embodiment, the problem to be solved by the present application comprises: how to determine time domain resources occupied by multiple sending of one random access preamble.

As one embodiment, the problem to be solved by the present application comprises: when a plurality of PRACH occasions are used for sending the same random access preamble, what is a relationship between symbols occupied by the plurality of PRACH occasions in a time domain.

As one embodiment, the problem to be solved by the present application comprises: for multiple transmission of one random access preamble in the plurality of PRACH occasions, how to reduce reception complexity of a receiving end or improve merging processing gains of the receiving end.

As one embodiment, the problem to be solved by the present application comprises: after introducing the first symbol type, how to perform multiple transmission of one random access preamble in the plurality of PRACH occasions.

As one embodiment, the problem to be solved by the present application comprises: after introducing a symbol available for full-duplex operations, how to perform multiple transmission of one random access preamble in the plurality of PRACH occasions.

As one embodiment, the problem to be solved by the present application comprises: how to improve the transmission performance of a random access preamble.

As one embodiment, benefits of the above method comprise: helping to improve uplink coverage.

As one embodiment, benefits of the above method comprise: helping to improve the transmission performance of the random access preamble.

As one embodiment, benefits of the above method comprise: helping to reduce the complexity of sending/receiving the random access preamble.

As one embodiment, benefits of the above method comprise: performing a plurality of PRACH (Physical Random Access Channel) transmission on symbols of the same symbol type, which facilitates merging processing of the multiple PRACH transmission at the receiving end, thereby improving transmission performance of PRACHs.

As one embodiment, benefits of the above method comprise: helping to perform PRACH transmission on the symbol available for the full-duplex operations.

As one embodiment, benefits of the above-mentioned method comprise: having good compatibility for existing 3GPP technical specifications.

According to one aspect of the present application, the above method is characterized in that,
at least one symbol of the first symbol type is indicated by the first RRC signaling as a downlink symbol and configured by the first information block to be available for uplink transmission.

According to one aspect of the present application, the above method is characterized in that,
the various symbol types further comprise a second symbol type, and at least one symbol of the second symbol type is indicated by the first RRC signaling as an uplink symbol; and the symbol indicated as the uplink symbol by the first RRC signaling is not a symbol of the first symbol type.

As one embodiment, benefits of the above-mentioned method comprise: having good compatibility for existing 3GPP technical specifications.

According to one aspect of the present application, the above method is characterized in that,
the first RRC signaling is tdd-UL-DL-ConfigurationCommon.

As one embodiment, benefits of the above method comprise: facilitating redefinition of cell specific downlink symbols.

According to one aspect of the present application, the above method is characterized in that,
all of the plurality of PRACH occasions only occupy symbols of the first symbol type in a time domain.

As one embodiment, benefits of the above method comprise: reducing the probability of collision between PRACH transmission on symbols of symbol types other than the first symbol type among the various symbol types (such as symbols of the second symbol type), and improving system efficiency.

According to one aspect of the present application, the above method is characterized by comprising:
receiving a second information block,
wherein the second information block is used for configuring a first PRACH occasion group, and the plurality of PRACH occasions all belong to the first PRACH occasion group.

According to one aspect of the present application, the above method is characterized in that,
a first-type PRACH occasion and a second-type PRACH occasion are both associated with a first SS/PBCH block index, and the first-type PRACH occasion and the second-type PRACH occasion respectively occupy symbols of different symbol types among the various symbol types; the first-type PRACH occasion and the second-type PRACH occasion are configured to form a plurality of PRACH occasion groups, and each of the plurality of PRACH occasion groups comprises only one or a plurality of first-type PRACH occasions or comprises only one or a plurality of second-type PRACH occasions; and the first PRACH occasion group is one of the plurality of PRACH occasion groups.

The present application discloses a method used in a second node for wireless communication, characterized by comprising:
sending first RRC signaling and a first information block, wherein a symbol type corresponding to at least one symbol other than a symbol indicated as an uplink symbol by the first RRC signaling depends on the first information block; and
receiving a first random access preamble in each of a plurality of PRACH occasions,
wherein all of the plurality of PRACH occasions only occupy symbols of the same symbol type among various symbol types in a time domain, the various symbol types at least comprise a first symbol type, and at least one symbol of the first symbol type is indicated by the first RRC signaling as a downlink symbol, but can be used for uplink transmission.

According to one aspect of the present application, the above method is characterized in that,
at least one symbol of the first symbol type is indicated by the first RRC signaling as a downlink symbol and configured by the first information block to be available for uplink transmission.

According to one aspect of the present application, the above method is characterized in that,
the various symbol types further comprise a second symbol type, and at least one symbol of the second symbol type is indicated by the first RRC signaling as an uplink symbol; and the symbol indicated as the uplink symbol by the first RRC signaling is not a symbol of the first symbol type.

According to one aspect of the present application, the above method is characterized in that,
the first RRC signaling is tdd-UL-DL-ConfigurationCommon.

According to one aspect of the present application, the above method is characterized in that,
all of the plurality of PRACH occasions only occupy symbols of the first symbol type in a time domain.

According to one aspect of the present application, the above method is characterized by comprising:
sending a second information block,
wherein the second information block is used for configuring a first PRACH occasion group, and the plurality of PRACH occasions all belong to the first PRACH occasion group.

According to one aspect of the present application, the above method is characterized in that,
a first-type PRACH occasion and a second-type PRACH occasion are both associated with a first SS/PBCH block index, and the first-type PRACH occasion and the second-type PRACH occasion respectively occupy symbols of different symbol types among the various symbol types; the first-type PRACH occasion and the second-type PRACH occasion are configured to form a plurality of PRACH occasion groups, and each of the plurality of PRACH occasion groups comprises only one or a plurality of first-type PRACH occasions or comprises only one or a plurality of second-type PRACH occasions; and the first PRACH occasion group is one of the plurality of PRACH occasion groups.

The present application discloses a first node used for wireless communication, characterized by comprising:
a first receiver, which receives first RRC signaling and a first information block, wherein a symbol type corresponding to at least one symbol other than a symbol indicated as an uplink symbol by the first RRC signaling depends on the first information block; and
a first transmitter, which sends a first random access preamble in each of a plurality of PRACH occasions,
wherein all of the plurality of PRACH occasions only occupy symbols of the same symbol type among various symbol types in a time domain, the various symbol types at least comprise a first symbol type, and at least one symbol of the first symbol type is indicated by the first RRC signaling as a downlink symbol, but can be used for uplink transmission.

The present application discloses a second node used for wireless communication, characterized by comprising:
a second transmitter, which sends first RRC signaling and a first information block, wherein a symbol type corresponding to at least one symbol other than a symbol indicated as an uplink symbol by the first RRC signaling depends on the first information block; and
a second receiver, which receives a first random access preamble in each of a plurality of PRACH occasions,
wherein all of the plurality of PRACH occasions only occupy symbols of the same symbol type among various symbol types in a time domain, the various symbol types at least comprise a first symbol type, and at least one symbol of the first symbol type is indicated by the first RRC signaling as a downlink symbol, but can be used for uplink transmission.

### Brief Description of the Drawings

Other features, purposes and advantages of the present application will become more apparent by reading the detailed description of the non-limiting embodiments with reference to the following drawings:
FIG. 1 shows a processing flow chart of a first node according to one embodiment of the present application;
FIG. 2 shows a schematic diagram of a network architecture according to one embodiment of the present application;
FIG. 3 shows a schematic diagram of a wireless protocol architecture of a user plane and a control plane according to one embodiment of the present application;
FIG. 4 shows a schematic diagram of a first communication device and a second communication device according to one embodiment of the present application;
FIG. 5 shows a flow chart of signal transmission according to one embodiment of the present application;
FIG. 6 shows an explanation schematic diagram of a second symbol type according to one embodiment of the present application;
FIG. 7 shows an explanation schematic diagram of a first PRACH occasion group according to one embodiment of the present application;
FIG. 8 shows a schematic diagram of relationships between a plurality of PRACH occasions, a first-type PRACH occasion, a second-type PRACH occasion, and a first SS/PBCH block index according to one embodiment of the present application;
FIG. 9 shows a schematic diagram of a relationship between a plurality of PRACH occasions and a first SS/PBCH block index according to one embodiment of the present application;
FIG. 10 shows an explanation schematic diagram of a behavior of a first node in response to a first random access preamble sent in each of a plurality of PRACH occasions according to one embodiment of the present application;
FIG. 11 shows a structural block diagram of a processing device in a first node device according to one embodiment of the present application; and
FIG. 12 shows a structural block diagram of a processing device in a second node device according to one embodiment of the present application.

### Detailed Description of Embodiments

The technical solution of the present application will be further described in detail below in conjunction with the accompanying drawings. It should be noted that, in the absence of conflicts, the embodiments and the features in the embodiments of the present application can be arbitrarily combined with each other.

### Embodiment 1

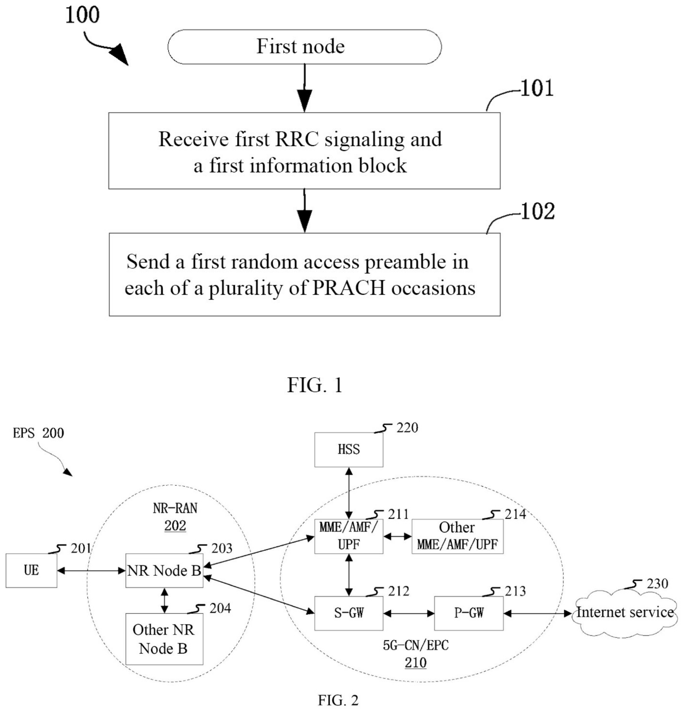

Embodiment 1 illustrates a processing flow chart of a first node according to one embodiment of the present application, as shown in FIG. 1.

In Embodiment 1, the first node in the present application receives first RRC signaling and a first information block in step 101; and sends a first random access preamble in each of a plurality of PRACH occasions in step 102.

In Embodiment 1, a symbol type corresponding to at least one symbol other than a symbol indicated as an uplink symbol by the first RRC signaling depends on the first information block; all of the plurality of PRACH occasions only occupy symbols of the same symbol type among various symbol types in a time domain; and the various symbol types at least comprise a first symbol type, and at least one symbol of the first symbol type is indicated by the first RRC signaling as a downlink symbol, but can be used for uplink transmission.

As one embodiment, the first RRC signaling comprises at least one field in at least one IE (Information Element).

As one embodiment, the first RRC signaling is one IE.

As one embodiment, the first RRC signaling is one field in one IE.

As one embodiment, the first RRC signaling is one RRC IE.

As one embodiment, the first RRC signaling comprises one RRC parameter.

As one embodiment, the first RRC signaling comprises time-domain configuration information.

As one embodiment, the first RRC signaling comprises TDD (Time Division Duplexing) configuration information of a UL/DL (Uplink/Downlink).

As one embodiment, the first RRC signaling comprises tdd-UL-DL-ConfigurationCommon.

As one embodiment, the first RRC signaling comprises tdd-UL-DL-ConfigurationDedicated.

As one embodiment, the first RRC signaling comprises tdd-UL-DL-Configuration Common and tdd-UL-DL-ConfigurationDedicated.

As one embodiment, the first RRC signaling is tdd-UL-DL-ConfigurationCommon.

As one embodiment, the first RRC signaling is tdd-UL-DL-ConfigurationDedicated.

As one embodiment, the name of the first RRC signaling comprises tdd-UL-DL-ConfigurationCommon.

As one embodiment, the name of the first RRC signaling comprises tdd-UL-DL-ConfigurationDedicated.

As one embodiment, the first information block comprises physical layer signaling.

As one embodiment, the first information block comprises DCI (Downlink Control Information).

As one embodiment, the first information block comprises at least one field in one DCI format.

As one embodiment, the first information block comprises higher layer signaling.

As one embodiment, the first information block comprises a MAC CE (Medium Access Control Layer Control Element).

As one embodiment, the first information block comprises RRC (Radio Resource Control) signaling.

As one embodiment, the first information block comprises at least one field in at least one IE (Information Element).

As one embodiment, the first information block is DCI.

As one embodiment, the first information block is one field in one DCI format.

As one embodiment, the first information block is one MAC CE.

As one embodiment, the first information block is one field in one MAC CE.

As one embodiment, the first information block is one RRC IE.

As one embodiment, the first information block is one field in one IE.

As one embodiment, the first information block is RRC signaling.

As one embodiment, the name of the first information block comprises subband.

As one embodiment, the name of the first information block comprises SBFD.

As one embodiment, the first information block comprises configuration information for at least one frequency band resource.

As one embodiment, the first information block comprises configuration information of time domain resources.

As one embodiment, the first information block comprises configuration information of resources for full-duplex operations.

As one embodiment, the first information block does not comprise tdd-UL-DL-ConfigurationCommon.

As one embodiment, the first information block is RRC signaling other than the first RRC signaling.

As one embodiment, the first RRC signaling is used for indicating a link direction of at least one symbol.

As one embodiment, the link direction comprises a downlink and an uplink.

As one embodiment, the symbol type corresponding to at least one symbol indicated by the first RRC signaling as a downlink symbol depends on the first information block.

As one embodiment, at least one symbol of the first symbol type is indicated as a flexible symbol by the first RRC signaling.

As one embodiment, the symbol type corresponding to at least one symbol indicated as a flexible symbol by the first RRC signaling depends on the first information block.

As one embodiment, a target symbol is a symbol indicated by the first information block, and at least one symbol of the first symbol type is indicated by the first RRC signaling as a flexible symbol and belongs to the target symbol.

As one embodiment, at least one symbol of the first symbol type is indicated as a flexible symbol by the first RRC signaling and configured by the first information block to be available for full-duplex operations.

As one embodiment, the symbol indicated as a flexible symbol by the first RRC signaling is not a symbol of the first symbol type.

As one embodiment, the plurality of PRACH occasions are configured for sending the same random access preamble.

As one embodiment, benefits of the above method comprise: helping to improve sending performance of the random access preamble.

As one embodiment, the plurality of PRACH occasions are configured to be associated with each other for sending the same random access preamble.

As one embodiment, benefits of the above method comprise: helping to improve sending performance of the random access preamble.

As one embodiment, the first random access preamble is repeatedly sent multiple times in the plurality of PRACH occasions.

As one embodiment, the meaning of the expression of "sending a first random access preamble in each of a plurality of PRACH occasions" is: respectively sending a plurality of signals in the plurality of PRACH occasions, wherein the plurality of signals are all generated based on the first random access preamble.

As one embodiment, the first random access preamble is mapped to a physical resource occupied by each of the plurality of PRACH occasions before being sent.

As one embodiment, multiple repetitions of one PRACH are respectively sent in the plurality of PRACH occasions, and each of the multiple repetitions of the one PRACH carries the first random access preamble.

As one embodiment, sending in all of the plurality of PRACH occasions is triggered together.

As one embodiment, the plurality of PRACH occasions are selected together to be used for sending the first random access preamble.

As one embodiment, the plurality of PRACH occasions are 2 PRACH occasions.

As one embodiment, the plurality of PRACH occasions are more than 2 PRACH occasions.

As one embodiment, the plurality of PRACH occasions are 3 PRACH occasions.

As one embodiment, the plurality of PRACH occasions are 4 PRACH occasions.

As one embodiment, the plurality of PRACH occasions are 5 PRACH occasions.

As one embodiment, the plurality of PRACH occasions are 6 PRACH occasions.

As one embodiment, the plurality of PRACH occasions are 7 PRACH occasions.

As one embodiment, the plurality of PRACH occasions are 8 PRACH occasions.

As one embodiment, the plurality of PRACH occasions comprise at most 1024 PRACH occasions.

As one embodiment, the plurality of PRACH occasions are all valid PRACH occasions.

As one embodiment, one valid PRACH occasion can be used for sending a random access preamble.

As one embodiment, one valid PRACH occasion only occupies symbols of one symbol type among the various symbol types in a time domain.

As one embodiment, one PRACH occasion comprises a configurable time-frequency resource.

As one embodiment, one PRACH occasion is a PRACH resource reserved for sending a random access preamble.

As one embodiment, any 2 of the plurality of PRACH occasions do not overlap in a time domain.

As one embodiment, 2 of the plurality of PRACH occasions overlap in a time domain.

As one embodiment, the various symbol types comprise the symbol type corresponding to at least one symbol other than the symbol indicated as an uplink symbol by the first RRC signaling.

As one embodiment, the symbols occupied by any 2 of the plurality of PRACH occasions in a time domain are correlated, and any 2 of the plurality of PRACH occasions satisfy the following relationship: the two PRACH occasions always occupy symbols of the same symbol type among the various symbol types in a time domain.

As one embodiment, one prerequisite for the first node to determine to send the first random access preamble in each of the plurality of PRACH occasions is that: all of the plurality of PRACH occasions only occupy symbols of the same symbol type among the various symbol types in a time domain.

As one embodiment, benefits of the above method comprise: helping to save equipment costs.

As one embodiment, benefits of the above method comprise: avoiding a negative impact on the merging processing at the receiving end caused by adopting different transmission parameters (respectively corresponding to different symbol types among the various symbol types) in multiple transmission in the plurality of PRACH occasions.

As one embodiment, when the symbol type corresponding to one symbol is one of the various symbol types, the one symbol is a symbol of the one symbol type among the various symbol types.

As one embodiment, the meaning of the expression of "all of the plurality of PRACH occasions only occupy symbols of the same symbol type among various symbol types in a time domain" is: all of the plurality of PRACH occasions only comprise symbols of the same symbol type among the various symbol types in a time domain.

As one embodiment, a first symbol is one symbol comprised in one of the plurality of PRACH occasions in a time domain, the first symbol is a symbol of a target symbol type, and the target symbol type is one symbol type among the various symbol types; and any symbol comprised in each of the plurality of PRACH occasions is a symbol of the target symbol type.

As one embodiment, the meaning of the expression of "all of the plurality of PRACH occasions only occupy symbols of the same symbol type among various symbol types in a time domain" is: all of the plurality of PRACH occasions only overlap with symbols of the same symbol type among the various symbol types in a time domain.

As one embodiment, a first symbol is one symbol overlapping with one of the plurality of PRACH occasions in a time domain, the first symbol is a symbol of a target symbol type, and the target symbol type is one symbol type among the various symbol types; and each of the plurality of PRACH occasions only overlaps with symbols of the target symbol type.

As one embodiment, the meaning of the expression of "all of the plurality of PRACH occasions only occupy symbols of the same symbol type among various symbol types in a time domain" is: all of the plurality of PRACH occasions are within the symbols of the same symbol type among the various symbol types in a time domain.

As one embodiment, all of the plurality of PRACH occasions are within time domain resources occupied by the symbols of the same symbol type among various symbol types in a time domain.

As one embodiment, time domain resources occupied by one of the plurality of PRACH occasions comprise at least part of time domain resources occupied by a first symbol, the first symbol is a symbol of a target symbol type, and the target symbol type is one symbol type among the various symbol types; and all time domain resources occupied by each of the plurality of PRACH occasions are within the time domain resources occupied by the symbols of the target symbol type.

As one embodiment, a symbol occupied by one PRACH occasion is a symbol for uplink transmission on a serving cell where the PRACH is located.

As one embodiment, each of the plurality of PRACH occasions does not occupy symbols of symbol types other than the same symbol type among various symbol types in a time domain.

As one embodiment, each of the plurality of PRACH occasions does not comprise symbols of symbol types other than the same symbol type among various symbol types in a time domain.

As one embodiment, each of the plurality of PRACH occasions does not overlap with symbols of symbol types other than the same symbol type among various symbol types in a time domain.

As one embodiment, the meaning of the expression of "at least one symbol of the first symbol type is indicated by the first RRC signaling as a downlink symbol, but can be used for uplink transmission" is: at least one symbol of the first symbol type is indicated by the first RRC signaling as a downlink symbol and determined to be used for uplink transmission based on the first information block.

As one embodiment, the meaning of the expression of "at least one symbol of the first symbol type is indicated by the first RRC signaling as a downlink symbol, but can be used for uplink transmission" is: at least one symbol of the first symbol type is indicated by the first RRC signaling as a downlink symbol and configured by the first information block to be available for uplink transmission.

As one embodiment, the meaning of the expression of "at least one symbol of the first symbol type is indicated by the first RRC signaling as a downlink symbol, but can be used for uplink transmission" is: at least one symbol of the first symbol type is indicated by the first RRC signaling as a downlink symbol and indicated by the first information block to be used for uplink transmission.

As one embodiment, the meaning of the expression of "at least one symbol of the first symbol type is indicated by the first RRC signaling as a downlink symbol, but can be used for uplink transmission" is: at least one symbol of the first symbol type is indicated by the first RRC signaling as a downlink symbol and configured to be available for full-duplex operations.

As one embodiment, at least one symbol of the first symbol type is indicated by the first RRC signaling as a downlink symbol and configured by the first information block to be available for full-duplex operations.

As one embodiment, any symbol of the first symbol type is not a symbol indicated as an uplink symbol by the first RRC signaling.

As one embodiment, a symbol indicated by the first RRC signaling as a downlink symbol and not used for uplink transmission is not a symbol of the first symbol type.

As one embodiment, the symbol of the first symbol type is a symbol available for full-duplex operations.

As one embodiment, benefits of the above method comprise: helping to support full-duplex operations.

As one embodiment, the symbol of the first symbol type is a symbol only used for half-duplex operations.

As one embodiment, the meaning of the expression of "be used for uplink transmission" comprises: be used for sending an uplink signal.

As one embodiment, the meaning of the expression of "be used for uplink transmission" comprises: at least be used for sending a PRACH.

As one embodiment, the meaning of the expression of "be used for uplink transmission" comprises: at least be used for sending a PUSCH (Physical Uplink Shared Channel).

As one embodiment, the meaning of the expression of "be used for uplink transmission" comprises: at least be used for sending a PRACH and a PUSCH.

As one embodiment, the meaning of the expression of "be used for uplink transmission" comprises: at least be used for sending a PRACH, a PUSCH, and a PUCCH (Physical Uplink Control Channel).

As one embodiment, the meaning of the expression of "be used for uplink transmission" comprises: be used for sending at least one of a PRACH, a PUSCH, a PUCCH, and an SRS (Sounding Reference Signal).

As one embodiment, the symbol type corresponding to one symbol of the first symbol type is the first symbol type.

### Embodiment 2

Embodiment 2 illustrates a schematic diagram of one network architecture according to the present application, as shown in FIG. 2.

FIG. 2 illustrates a diagram of a network architecture 200 of a 5G NR, LTE (Long-Term Evolution) and LTE-A (Long-Term Evolution Advanced) system. The 5G NR or LTE network architecture 200 may be referred to as EPS (Evolved Packet System) 200 or some other suitable terminologies. The EPS 200 may comprise one or more pieces of UE (User Equipment) 201, an NG-RAN (Next Generation Radio Access Network) 202, an EPC (Evolved Packet Core)/5G-CN (5G-Core Network) 210, an HSS (Home Subscriber Server) 220, and an Internet service 230. The EPS may be interconnected with other access networks, but these entities/interfaces are not shown for simplicity. As shown in the figure, the EPS provides packet switching services. However, those skilled in the art will readily appreciate that the various concepts presented throughout the present application may be extended to networks providing circuit switching services or other cellular networks. The NG-RAN comprises an NR Node B (gNB) 203 and other gNB204. The gNB203 provides user and control plane protocol termination toward the UE201. The gNB203 may be connected to other gNB204 via an Xn interface (e.g., backhaul). The gNB203 may also be referred to as a base station, a base station transceiving station, a radio base station, a radio transceiving device, a transceiving device function, a basic service set (BSS), an extended service set (ESS), a TRP (Transmitter Receiver Point), or some other suitable terminologies. The gNB203 provides an access point to the EPC/5G-CN 210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the EPC/5G-CN 210 by an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Data Network Gateway) 213. The MME/AMF/UPF211 is a control node that processes signaling between the UE201 and the EPC/5G-CN 210. Generally, the MME/AMF/UPF211 provides bearer and connection management. All user IP (Internet Protocol) packets are transmitted through the S-GW212, wherein the S-GW212 itself is connected to the P-GW213. The P-GW213 provides UE IP address allocation and other functions. The P-GW213 is connected to the Internet service 230. The Internet service 230 comprises operator-corresponding Internet protocol services, which may specifically comprise Internet, Intranet, an IMS (IP Multimedia Subsystem) and packet switching streaming services.

As one embodiment, the UE201 corresponds to the first node in the present application.

As one embodiment, the gNB203 corresponds to the second node in the present application.

As one embodiment, the UE201 corresponds to the first node in the present application, and the gNB203 corresponds to the second node in the present application.

As one embodiment, the gNB203 is a MacroCellular base station.

As one embodiment, the gNB203 is a Micro Cell base station.

As one embodiment, the gNB203 is a PicoCell base station.

As one embodiment, the gNB203 is a Femtocell.

As one embodiment, the gNB203 is a base station device that supports large latency differences.

As one embodiment, the gNB203 is a flying platform device.

As one embodiment, the gNB203 is a satellite device.

### Embodiment 3

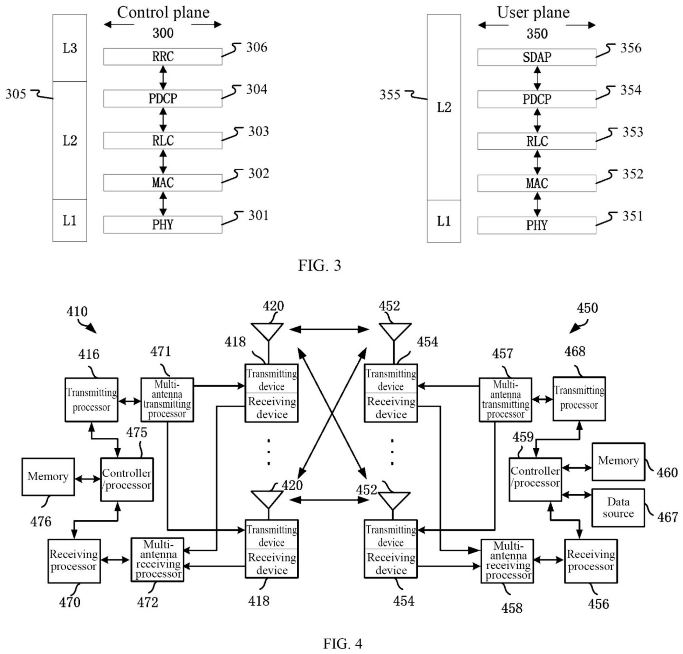

Embodiment 3 shows a schematic diagram of an embodiment of a wireless protocol architecture of one user plane and one control plane according to the present application, as shown in FIG. 3. FIG. 3 is a schematic diagram illustrating an embodiment of a radio protocol architecture for a user plane 350 and a control plane 300, and FIG. 3 shows a radio protocol architecture for a first communication node device (UE, gNB or RSU in V2X) and a second communication node device (gNB, UE or RSU in V2X), or the control plane 300 between two pieces of UE using three layers: Layer 1, Layer 2, and Layer 3. The Layer 1 (L1 layer) is the lowest layer and implements various PHY (physical layer) signal processing functions. The L1 layer will be referred to as PHY301 herein. The Layer 2 (L2 layer) 305 is above the PHY301 and is responsible for a link between the first communication node device and the second communication node device as well as between two pieces of UE through the PHY301. The L2 layer 305 comprises a MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembly of upper layer data packets, retransmission of lost data packets, and reordering of data packets to compensate for out-of-order reception due to an HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring a lower layer using RRC signaling between the second communication node device and the first communication node device. The radio protocol architecture of the user plane 350 comprises the Layer 1 (L1 layer) and the Layer 2 (L2 layer). The radio protocol architecture for the first communication node device and the second communication node device in the user plane 350 is substantially the same as corresponding layers and sublayers in the control plane 300 for a physical layer 351, a PDCP sublayer 354 in the L2 layer 355, an RLC sublayer 353 in the L2 layer 355, and a MAC sublayer 352 in the L2 layer 355, but the PDCP sublayer 354 also provides header compression for upper layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first communication node device may have several upper layers above the L2 layer 355, comprising a network layer (e.g., an IP layer) terminating at a P-GW on a network side and an application layer terminating at another end (e.g., remote UE, a server, etc.) of the connection.

As one embodiment, the wireless protocol architecture in FIG. 3 is applicable to the first node in the present application.

As one embodiment, the wireless protocol architecture in FIG. 3 is applicable to the second node in the present application.

As one embodiment, the first RRC signaling in the present application is generated in the RRC sublayer 306.

As one embodiment, the first information block in the present application is generated in the RRC sublayer 306.

As one embodiment, the first information block in the present application is generated in the MAC sublayer 302.

As one embodiment, the first information block in the present application is generated in the PHY301.

As one embodiment, the second information block in the present application is generated in the RRC sublayer 306.

As one embodiment, the second information block in the present application is generated in the MAC sublayer 302.

As one embodiment, the second information block in the present application is generated in the PHY301.

### Embodiment 4

Embodiment 4 shows a schematic diagram of a first communication device and a second communication device according to the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In transmission from the first communication device 410 to the second communication device 450, at the first communication device 410, upper layer data packets from a core network are provided to the controller/processor 475. The controller/processor 475 implements the functionality of the L2 layer. In the transmission from the first communication device 410 to the first communication device 450, the controller/processor 475 provides header compression, encryption, packet segmentation and reordering, multiplexing between logical and transport channels, and radio resource allocation to the second communication device 450 based on various priority metrics. The controller/processor 475 is also responsible for retransmission of lost packets and the signaling to the second communication device 450. The transmitting processor 416 and the multi-antenna transmitting processor 471 implement various signal processing functions for the L1 layer (i.e., physical layer). The transmitting processor 416 implements coding and interleaving to facilitate forward error correction (FEC) at the second communication device 450, as well as mapping of signal clusters based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more spatial streams. The transmitting processor 416 then maps each spatial stream to a subcarrier, multiplexes with a reference signal (e.g., pilot frequency) in a time domain and/or frequency domain, and then uses an inverse fast Fourier transform (IFFT) to generate a physical channel carrying a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the first communication device 410 to the second communication device 450, at the second communication device 450, each receiving device 454 receives a signal through its corresponding antenna 452. Each receiving device 454 recovers information modulated onto a radio frequency carrier, converts a radio frequency stream into a baseband multi-carrier symbol stream, and provides it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses a fast Fourier transform (FFT) to convert the baseband multi-carrier symbol stream from a time domain to a frequency domain after the receiving analog precoding/beamforming operations. In the frequency domain, a physical layer data signal and the reference signal are demultiplexed by the receiving processor 456, wherein the reference signal will be used for channel estimation, and the data signal is recovered after multi-antenna detection in the multi-antenna receiving processor 458 to recover any spatial stream destined for the second communication device 450. Symbols on each spatial stream are demodulated and recovered in the receiving processor 456, and a soft decision is generated. The receiving processor 456 then decodes and deinterleaves the soft decision to recover upper layer data and control signals transmitted by the first communication device 410 on the physical channel. The upper layer data and control signals are then provided to the controller/processor 459. The controller/processor 459 implements functions of the L2 layer. The controller/processor 459 may be associated with the memory 460 that stores program code and data. The memory 460 may be referred to as a computer-readable medium. In the transmission from the first communication device 410 to the second communication device 450, the controller/processor 459 provides demultiplexing between transport and logical channels, packet reassembly, decryption, header decompression, and control signal processing to recover upper layer data packets from the core network. The upper layer data packets are then provided to all protocol layers above the L2 layer. Various control signals may also be provided to the L3 for L3 processing.

In the transmission from the second communication device 450 to the first communication device 410, at the second communication device 450, the data source 467 is used for providing the upper layer data packets to the controller/processor 459. The data source 467 represents all protocol layers above the L2 layer. Similar to the sending function at the first communication device 410 described in the transmission from the first communication device 410 to the second communication device 450, the controller/processor 459 implements header compression, encryption, packet segmentation and reordering, and multiplexing between logical and transport channels based on radio resource allocation, and implements the functions of the L2 layer for a user plane and a control plane. The controller/processor 459 is also responsible for the retransmission of lost packets and the signaling to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the generated spatial stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into the radio frequency stream, which is then provided to the antenna 452.

In the transmission from the second communication device 450 to the first communication device 410, a function at the first communication device 410 is similar to a receiving function at the second communication device 450 described in the transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with the memory 476 that stores program code and data. The memory 476 may be referred to as a computer-readable medium. In the transmission from the second communication device 450 to the first communication device 410, the controller/processor 475 provides demultiplexing between transport and logical channels, packet reassembly, decryption, header decompression, and control signal processing to recover upper layer data packets from the UE450. The upper layer data packets from the controller/processor 475 can be provided to the core network.

As one embodiment, the first node in the present application comprises the second communication device 450, and the second node in the present application comprises the first communication device 410.

As one sub-embodiment of the above embodiment, the first node is user equipment, and the second node is a relay node.

As one sub-embodiment of the above embodiment, the first node is user equipment, and the second node is a base station device.

As one sub-embodiment of the above embodiment, the first node is a relay node, and the second node is a base station device.

As one sub-embodiment of the above embodiment, the second communication device 450 comprises: at least one controller/processor; and the at least one controller/processor is responsible for HARQ operations.

As one sub-embodiment of the above embodiment, the first communication device 410 comprises: at least one controller/processor; and the at least one controller/processor is responsible for HARQ operations.

As one sub-embodiment of the above embodiment, the first communication device 410 comprises: at least one controller/processor; and the at least one controller/processor is responsible for performing error detection using acknowledgement (ACK) and/or negative acknowledgement (NACK) protocols to support HARQ operations.

As one embodiment, the second communication device 450 comprises: at least one processor and at least one memory, the at least one memory comprising computer program code; and the at least one memory and the computer program code are configured to be used together with the at least one processor. The second communication device 450 apparatus at least: receives first RRC signaling and a first information block, wherein the symbol type corresponding to at least one symbol other than the symbol indicated as an uplink symbol by the first RRC signaling depends on the first information block; and sends a first random access preamble in each of a plurality of PRACH occasions, wherein all of the plurality of PRACH occasions only occupy symbols of the same symbol type among various symbol types in a time domain, the various symbol types at least comprise a first symbol type, and at least one symbol of the first symbol type is indicated by the first RRC signaling as a downlink symbol, but can be used for uplink transmission.

As one sub-embodiment of the above embodiment, the second communication device 450 corresponds to the first node in the present application.

As one embodiment, the second communication device 450 comprises: a memory storing a computer-readable instruction program that generates actions when executed by at least one processor, the actions comprising: receiving first RRC signaling and a first information block, wherein the symbol type corresponding to at least one symbol other than the symbol indicated as an uplink symbol by the first RRC signaling depends on the first information block; and sending a first random access preamble in each of a plurality of PRACH occasions, wherein all of the plurality of PRACH occasions only occupy symbols of the same symbol type among various symbol types in a time domain, the various symbol types at least comprise a first symbol type, and at least one symbol of the first symbol type is indicated by the first RRC signaling as a downlink symbol, but can be used for uplink transmission.

As one sub-embodiment of the above embodiment, the second communication device 450 corresponds to the first node in the present application.

As one embodiment, the first communication device 410 comprises: at least one processor and at least one memory, the at least one memory comprising computer program code; and the at least one memory and the computer program code are configured to be used together with the at least one processor. The first communication device 410 apparatus at least: sends first RRC signaling and a first information block, wherein the symbol type corresponding to at least one symbol other than the symbol indicated as an uplink symbol by the first RRC signaling depends on the first information block; and receives a first random access preamble in each of a plurality of PRACH occasions, wherein all of the plurality of PRACH occasions only occupy symbols of the same symbol type among various symbol types in a time domain, the various symbol types at least comprise a first symbol type, and at least one symbol of the first symbol type is indicated by the first RRC signaling as a downlink symbol, but can be used for uplink transmission.

As one sub-embodiment of the above embodiment, the first communication device 410 corresponds to the second node in the present application.

As one embodiment, the first communication device 410 comprises: a memory storing a computer-readable instruction program that generates actions when executed by at least one processor, the actions comprising: sending first RRC signaling and a first information block, wherein the symbol type corresponding to at least one symbol other than the symbol indicated as an uplink symbol by the first RRC signaling depends on the first information block; and receiving a first random access preamble in each of a plurality of PRACH occasions, wherein all of the plurality of PRACH occasions only occupy symbols of the same symbol type among various symbol types in a time domain, the various symbol types at least comprise a first symbol type, and at least one symbol of the first symbol type is indicated by the first RRC signaling as a downlink symbol, but can be used for uplink transmission.

As one sub-embodiment of the above embodiment, the first communication device 410 corresponds to the second node in the present application.

As one embodiment, at least one of {the antenna 452, the receiving device 454, the multi-antenna receiving processor 458, the receiving processor 456, the controller/processor 459, the memory 460, and the data source 467} is used for receiving the first RRC signaling in the present application.

As one embodiment, at least one of {the antenna 420, the transmitting device 418, the multi-antenna transmitting processor 471, the transmitting processor 416, the controller/processor 475, and the memory 476} is used for sending the first RRC signaling in the present application.

As one embodiment, at least one of {the antenna 452, the receiving device 454, the multi-antenna receiving processor 458, the receiving processor 456, the controller/processor 459, the memory 460, and the data source 467} is used for receiving the first information block in the present application.

As one embodiment, at least one of {the antenna 420, the transmitting device 418, the multi-antenna transmitting processor 471, the transmitting processor 416, the controller/processor 475, and the memory 476} is used for sending the first information block in the present application.

As one embodiment, at least one of {the antenna 452, the receiving device 454, the multi-antenna receiving processor 458, the receiving processor 456, the controller/processor 459, the memory 460, and the data source 467} is used for receiving the second information block in the present application.

As one embodiment, at least one of {the antenna 420, the transmitting device 418, the multi-antenna transmitting processor 471, the transmitting processor 416, the controller/processor 475, and the memory 476} is used for sending the second information block in the present application.

As one embodiment, at least one of {the antenna 452, the transmitting device 454, the multi-antenna transmitting processor 458, the transmitting processor 468, the controller/processor 459, the memory 460, and the data source 467} is used for sending the first random access preamble in the present application.

As one embodiment, at least one of {the antenna 420, the receiving device 418, the multi-antenna receiving processor 472, the receiving processor 470, the controller/processor 475, and the memory 476} is used for receiving the first random access preamble in the present application.

### Embodiment 5

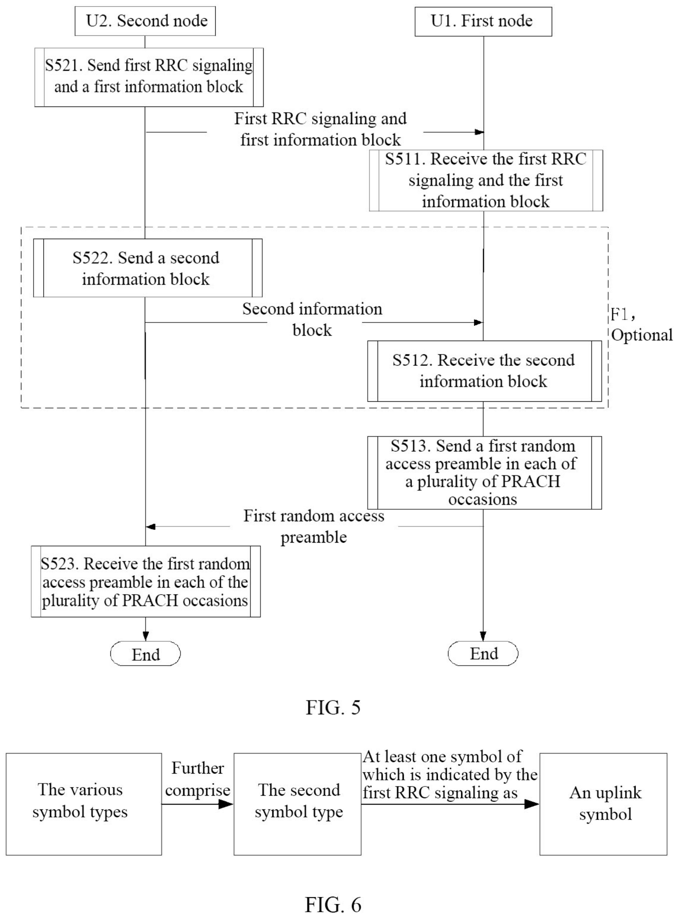

Embodiment 5 illustrates a flow chart of signal transmission according to one embodiment of the present application, as shown in FIG. 5. In FIG. 5, a first node U1 and a second node U2 communicate through an air interface. In particular, a step in a dotted block F1 in FIG. 5 is optional; and in FIG. 5, a sequential order between a step pair {S521, S511} and a step pair {S522, S512} does not represent a specific time relationship.

The first node U1 receives first RRC signaling and a first information block in step S511; receives a second information block in step S512; and sends a first random access preamble in each of a plurality of PRACH occasions in step S513.

The second node U2 sends first RRC signaling and a first information block in step S521; sends a second information block in step S522; and receives a first random access preamble in each of a plurality of PRACH occasions in step S523.

In Embodiment 5, the symbol type corresponding to at least one symbol other than a symbol indicated as an uplink symbol by the first RRC signaling depends on the first information block; all of the plurality of PRACH occasions only occupy symbols of the same symbol type among various symbol types in a time domain; the various symbol types at least comprise a first symbol type, and at least one symbol of the first symbol type is indicated by the first RRC signaling as a downlink symbol and configured by the first information block to be available for uplink transmission; the various symbol types further comprise a second symbol type, and at least one symbol of the second symbol type is indicated by the first RRC signaling as an uplink symbol; the symbol indicated as an uplink symbol by the first RRC signaling is not a symbol of the first symbol type; the first RRC signaling is tdd-UL-DL-ConfigurationCommon; the second information block is used for configuring a first PRACH occasion group, and the plurality of PRACH occasions all belong to the first PRACH occasion group; and all of the plurality of PRACH occasions only occupy symbols of the first symbol type in a time domain, or all of the plurality of PRACH occasions only occupy symbols of the second symbol type in a time domain.

As one sub-embodiment of Embodiment 5, one prerequisite for the first node U1 to determine to send the first random access preamble in each of the plurality of PRACH occasions is that: all of the plurality of PRACH occasions only occupy symbols of the same symbol type among the various symbol types in a time domain.

As one sub-embodiment of Embodiment 5, the first information block and the second information block are both RRC signaling.

As one embodiment, the first node U1 is the first node in the present application.

As one embodiment, the second node U2 is the second node in the present application.

As one embodiment, the first node U1 is one piece of UE.

As one embodiment, the second node U2 is one base station.

As one embodiment, an air interface between the second node U2 and the first node U1 is a Uu interface.

As one embodiment, an air interface between the second node U2 and the first node U1 comprises a cellular link.

As one embodiment, an air interface between the second node U2 and the first node U1 comprises a wireless interface between a base station device and user equipment.

As one embodiment, an air interface between the second node U2 and the first node U1 comprises a wireless interface between a satellite device and user equipment.

As one embodiment, the step in the dotted block F1 exists.

As one embodiment, the step in the dotted block F1 does not exist.

As one embodiment, the first RRC signaling is received before the first information block.

As one embodiment, the first RRC signaling is received after the first information block.

As one embodiment, the first RRC signaling and the first information block are received simultaneously.

As one embodiment, the first RRC signaling is received before the second information block.

As one embodiment, the first RRC signaling is received after the second information block.

As one embodiment, the first RRC signaling and the second information block are received simultaneously.

As one embodiment, the first information block is received before the second information block.

As one embodiment, the first information block is received after the second information block.

As one embodiment, the first information block and the second information block are received simultaneously.

As one embodiment, the expression of "receiving a first random access preamble in each of a plurality of PRACH occasions" comprises: the second node U2 obtains the first random access preamble after performing merging processing on signals received in all of the plurality of PRACH occasions.

As one embodiment, the expression of "receiving a first random access preamble in each of a plurality of PRACH occasions" comprises: the second node U2 performs multiple independent detections for the first random access preamble respectively in the plurality of PRACH occasions.

### Embodiment 6

Embodiment 6 illustrates an explanation schematic diagram of a second symbol type according to one embodiment of the present application, as shown in FIG. 6.

In Embodiment 6, the various symbol types further comprise the second symbol type, and at least one symbol of the second symbol type is indicated by the first RRC signaling as an uplink symbol.

As one embodiment, the symbol indicated as an uplink symbol by the first RRC signaling is not a symbol of the first symbol type.

As one embodiment, each symbol of the second symbol type is not a symbol of the first symbol type, and at least one symbol of the second symbol type is not before the SS/PBCH block (Synchronization Signal and Physical Broadcast Channel Block) in a PRACH slot, is at least N symbols later than the last downlink symbol, and is at least N symbols later than the last SS/PBCH block symbol, wherein N depends on a preamble SCS (Subcarrier Spacing).

As one embodiment, different values of N and different preamble SCSs follow a predefined mapping rule.

As one embodiment, the symbol type corresponding to one symbol of the second symbol type is the second symbol type.

As one embodiment, a target symbol is a symbol indicated by the first information block, and at least one symbol of the second symbol type is indicated as a flexible symbol by the first RRC signaling and does not belong to the target symbol.

As one embodiment, any symbol of the first symbol type is not a symbol of the second symbol type, and any symbol of the second symbol type is not a symbol of the first symbol type.

As one embodiment, the various symbol types only comprise the first symbol type and the second symbol type.

As one embodiment, the various symbol types further comprise symbol types other than the first symbol type and the second symbol type.

As one embodiment, the various symbol types only comprise the first symbol type and the third symbol type.

As one embodiment, the various symbol types further comprise symbol types other than the first symbol type and the third symbol type.

As one embodiment, the various symbol types comprise a third symbol type, and any symbol of the third symbol type is indicated by the first RRC signaling as a sidelink symbol.

As one embodiment, the various symbol types only comprise the first symbol type and the fourth symbol type.

As one embodiment, the various symbol types further comprise symbol types other than the first symbol type and the fourth symbol type.

As one embodiment, the various symbol types comprise a fourth symbol type, and at least one symbol of the fourth symbol type cannot be used for downlink transmission nor can it be used for uplink transmission.

As one embodiment, benefits of the above method comprise: facilitating power saving on a network side.

As one embodiment, all of the plurality of PRACH occasions only occupy symbols of the first symbol type in a time domain, or all of the plurality of PRACH occasions only occupy symbols of the second symbol type in a time domain.

As one embodiment, benefits of the above method comprise: facilitating obtaining more optional PRACH resources and a gain brought by better merging processing at a receiving end.

### Embodiment 7

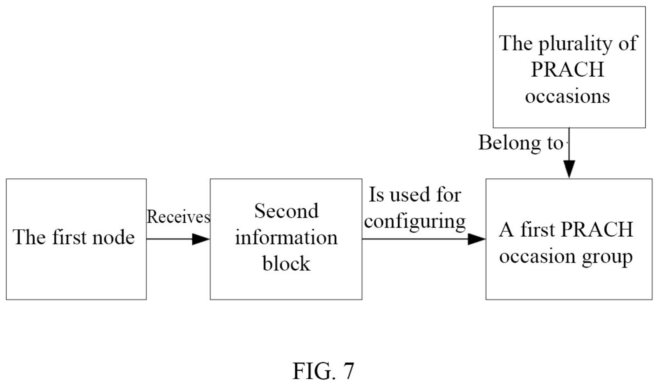

Embodiment 7 illustrates an explanation schematic diagram of a first PRACH occasion group according to one embodiment of the present application, as shown in FIG. 7.

In Embodiment 7, the first node in the present application receives a second information block; and the second information block is used for configuring a first PRACH occasion group, and the plurality of PRACH occasions all belong to the first PRACH occasion group.

As one embodiment, the second information block comprises higher layer signaling.

As one embodiment, the second information block comprises a MAC CE.

As one embodiment, the second information block comprises RRC signaling.

As one embodiment, the second information block comprises at least one field in at least one IE.

As one embodiment, the second information block is one MAC CE.

As one embodiment, the second information block is one field in one MAC CE.

As one embodiment, the second information block is one RRC IE.

As one embodiment, the second information block is one field in one IE.

As one embodiment, the second information block is RRC signaling.

As one embodiment, the second information block comprises configuration information of random access.

As one embodiment, the second information block is used for indicating the number of PRACH occasions comprised in the first PRACH occasion group.

As one embodiment, the second information block is used for indicating that all PRACH occasions in the first PRACH occasion group are associated with each other.

As one embodiment, the first PRACH occasion group is configured for sending the same random access preamble.

As one embodiment, the first PRACH occasion group only comprises the plurality of PRACH occasions.

As one embodiment, the first PRACH occasion group further comprises at least one PRACH occasion other than the plurality of PRACH occasions.

As one embodiment, all PRACH occasions in the first PRACH occasion group are valid PRACH occasions.

As one embodiment, at least one PRACH occasion in the first PRACH occasion group is not a valid PRACH occasion.

As one embodiment, the first PRACH occasion group further comprises at least one PRACH occasion other than the plurality of PRACH occasions; and all of the plurality of PRACH occasions only occupy symbols of a target symbol type in a time domain, and each PRACH occasion other than the plurality of PRACH occasions in the first PRACH occasion group occupies symbols of symbol types other than the target symbol type among the various symbol types, wherein the target symbol type is one of the various symbol types.

As one embodiment, the first PRACH occasion group further comprises at least one PRACH occasion other than the plurality of PRACH occasions; and all of the plurality of PRACH occasions only occupy symbols of a target symbol type in a time domain, and each valid PRACH occasion other than the plurality of PRACH occasions in the first PRACH occasion group occupies symbols of symbol types other than the target symbol type among the various symbol types, wherein the target symbol type is one of the various symbol types.

As one embodiment, the target symbol type is the first symbol type.

As one embodiment, the target symbol type is a symbol type other than the first symbol type among the various symbol types.

As one embodiment, the target symbol type is the second symbol type.

As one embodiment, the target symbol type is the third symbol type.

As one embodiment, the target symbol type is the fourth symbol type.

As one embodiment, the first PRACH occasion group further comprises at least one PRACH occasion other than the plurality of PRACH occasions; and all of the plurality of PRACH occasions only occupy symbols of the second symbol type in a time domain, and each PRACH occasion other than the plurality of PRACH occasions in the first PRACH occasion group only occupies symbols of the first symbol type.

As one embodiment, the first PRACH occasion group further comprises at least one PRACH occasion other than the plurality of PRACH occasions; and all of the plurality of PRACH occasions only occupy symbols of the first symbol type in a time domain, and each PRACH occasion other than the plurality of PRACH occasions in the first PRACH occasion group only occupies symbols of the second symbol type.

As one embodiment, the first node determines that the first random access preamble is not sent in a PRACH occasion other than the plurality of PRACH occasions in the first PRACH occasion group.

As one embodiment, benefits of the above method comprise: avoiding a negative impact on the merging processing at the receiving end caused by adopting different transmission parameters (respectively corresponding to different symbol types among the various symbol types) in multiple transmission in the first PRACH occasion group.

As one embodiment, when at least one PRACH occasion group is configured, the first node treats one PRACH occasion group as one PRACH occasion during at least part of the random access process.

### Embodiment 8

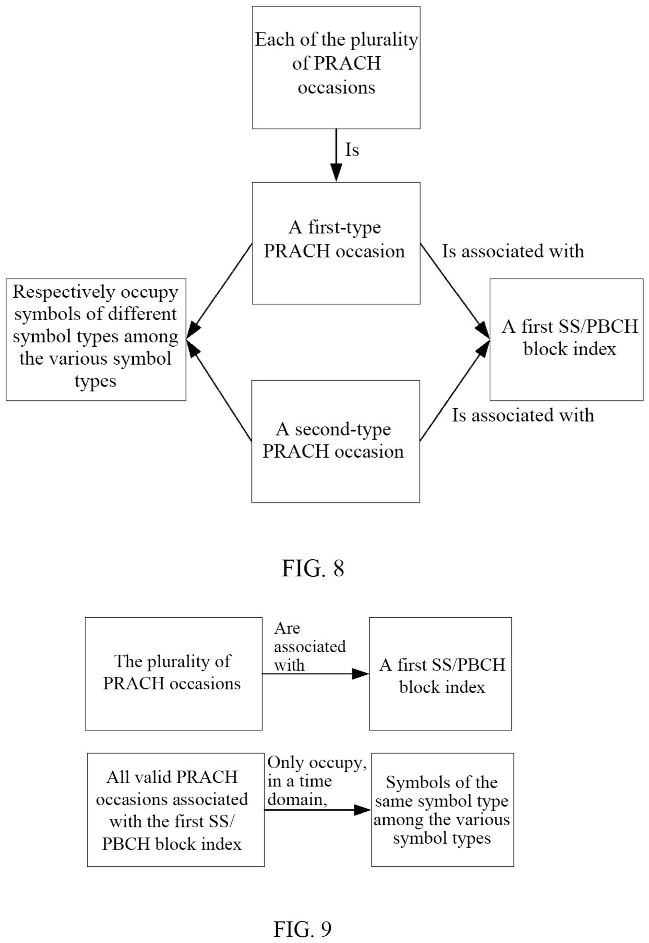

Embodiment 8 illustrates a schematic diagram of relationships between a plurality of PRACH occasions, a first-type PRACH occasion, a second-type PRACH occasion, and a first SS/PBCH block index according to one embodiment of the present application, as shown in FIG. 8.

In Embodiment 8, a first-type PRACH occasion and a second-type PRACH occasion are both associated with a first SS/PBCH block index, and the first-type PRACH occasion and the second-type PRACH occasion respectively occupy symbols of different symbol types among the various symbol types; and each of the plurality of PRACH occasions is the first-type PRACH occasion.

As one embodiment, the first-type PRACH occasion only occupies symbols of the first symbol type, and the second-type PRACH occasion only occupies symbols of the second symbol type.

As one embodiment, the second-type PRACH occasion only occupies symbols of the first symbol type, and the first-type PRACH occasion only occupies symbols of the second symbol type.

As one embodiment, the first-type PRACH occasion and the second-type PRACH occasion are both valid PRACH occasions.

As one embodiment, the first-type PRACH occasion and the second-type PRACH occasion are configured to form a plurality of PRACH occasion groups, and each of the plurality of PRACH occasion groups comprises only at least one first-type PRACH occasion or comprises only at least one second-type PRACH occasion; and the first PRACH occasion group is one of the plurality of PRACH occasion groups.

### Embodiment 9

Embodiment 9 illustrates a schematic diagram of a relationship between a plurality of PRACH occasions and a first SS/PBCH block index according to one embodiment of the present application, as shown in FIG. 9.

In Embodiment 9, the plurality of PRACH occasions are all associated with a first SS/PBCH block index, and all valid PRACH occasions associated with the first SS/PBCH block index only occupy symbols of the same symbol type among the various symbol types in a time domain.

As one embodiment, all valid PRACH occasions in the first PRACH occasion group are associated with the first SS/PBCH block index.

As one embodiment, an association relationship between one valid PRACH occasion and one SS/PBCH block index is configurable.

As one embodiment, when one valid PRACH occasion is mapped to one SS/PBCH block index according to a configuration of RRC signaling, the valid PRACH occasion is associated with the SS/PBCH block index.

As one embodiment, when one valid PRACH occasion is mapped to a plurality of SS/PBCH block indexes according to a configuration of RRC signaling, the valid PRACH occasion is associated with each of the plurality of SS/PBCH block indexes.

As one embodiment, when one SS/PBCH block index is used for indicating one valid PRACH occasion, the valid PRACH occasion is associated with the SS/PBCH block index.

As one embodiment, when one SS/PBCH block index is used for indicating a plurality of valid PRACH occasions, each of the plurality of valid PRACH occasions is associated with the SS/PBCH block index.

### Embodiment 10

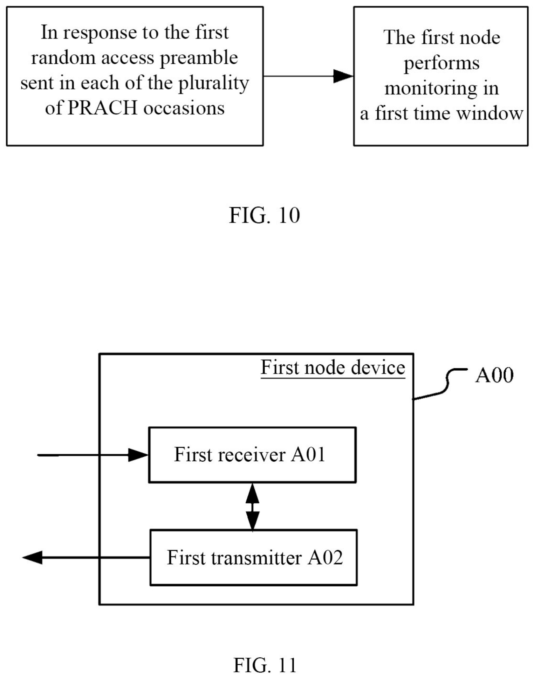

Embodiment 10 illustrates an explanation schematic diagram of a behavior of a first node in response to a first random access preamble sent in each of a plurality of PRACH occasions according to one embodiment of the present application, as shown in FIG. 10.

In Embodiment 10, in response to the first random access preamble sent in each of the plurality of PRACH occasions, the first node performs monitoring in a first time window, and the first time window occupies a duration of at least one slot.

As one embodiment, the meaning of the expression of "the first node performs monitoring in a first time window" is: the first node monitors, in the first time window, a DCI format for responding to the first random access preamble sent in each of the plurality of PRACH occasions.

As one embodiment, the meaning of the expression of "the first node performs monitoring in a first time window" is: the first node attempts to detect, in the first time window, a DCI format 1_0 whose CRC (Cyclic Redundancy Check) is scrambled by a corresponding RA-RNTI.

As one embodiment, the meaning of the expression of "the first node performs monitoring in a first time window" is: the first node monitors, in the first time window, a DCI format for a random access response (RAR).

As one embodiment, the meaning of the expression of "the first node performs monitoring in a first time window" is: the first node monitors, in the first time window, a DCI format that schedules a PDSCH (Physical Downlink Shared Channel) bearing RAR UL grant information.

As one embodiment, the first time window starts at the first symbol occupied by the earliest CORESET (Control Resource Set) configured for receiving a PDCCH (Physical Downlink Control Channel) for a first-type PDCCH CSS set (Type1-PDCCH CSS set), which is at least one symbol later than the last symbol occupied by the latest PRACH occasion among the plurality of PRACH occasions.

As one embodiment, the benefits of the above method comprise: reducing the delay of the random access response (RAR).

As one embodiment, the first time window starts at the first symbol occupied by the earliest CORESET configured for receiving a PDCCH (Physical Downlink Control Channel) for the first-type PDCCH CSS set (Type1-PDCCH CSS set), which is at least one symbol later than the last symbol occupied by the latest PRACH occasion in the first PRACH occasion group.

As one embodiment, the first-type PDCCH CSS set is a common search space set (CSS set).

As one embodiment, the first-type PDCCH CSS set is configured by ra-SearchSpace in PDCCH-ConfigCommon.

As one embodiment, the first-type PDCCH CSS set is used for detecting a DCI format whose CRC is scrambled by an RA-RNTI, an MsgB-RNTI, or a TC-RNTI on a primary cell.

As one embodiment, the first time window is a time window used for monitoring a random access response (RAR).

### Embodiment 11

Embodiment 11 illustrates a structural block diagram of a processing device in a first node device, as shown in FIG. 11. In FIG. 11, the processing device A00 of the first node device comprises a first receiver A01 and a first transmitter A02.

As one embodiment, the first node device A00 is user equipment.

As one embodiment, the first node device A00 is a relay node.

As one embodiment, the first node device A00 is a vehicle-mounted communication device.

As one embodiment, the first node device A00 is conventional user equipment.

As one embodiment, the first node device A00 is a piece of UE supporting a configuration related to full-duplex operations.

As one embodiment, the first receiver A01 comprises at least one of an antenna 452, a receiving device 454, a multi-antenna receiving processor 458, a receiving processor 456, a controller/processor 459, a memory 460, and a data source 467 in FIG. 4 of the present application.

As one embodiment, the first receiver A01 comprises at least the first five of an antenna 452, a receiving device 454, a multi-antenna receiving processor 458, a receiving processor 456, a controller/processor 459, a memory 460, and a data source 467 in FIG. 4 of the present application.

As one embodiment, the first receiver A01 comprises at least the first four of an antenna 452, a receiving device 454, a multi-antenna receiving processor 458, a receiving processor 456, a controller/processor 459, a memory 460, and a data source 467 in FIG. 4 of the present application.

As one embodiment, the first receiver A01 comprises at least the first three of an antenna 452, a receiving device 454, a multi-antenna receiving processor 458, a receiving processor 456, a controller/processor 459, a memory 460, and a data source 467 in FIG. 4 of the present application.

As one embodiment, the first receiver A01 comprises at least the first two of an antenna 452, a receiving device 454, a multi-antenna receiving processor 458, a receiving processor 456, a controller/processor 459, a memory 460, and a data source 467 in FIG. 4 of the present application.

As one embodiment, the first transmitter A02 comprises at least one of an antenna 452, a transmitting device 454, a multi-antenna transmitting device processor 457, a transmitting processor 468, a controller/processor 459, a memory 460, and a data source 467 in FIG. 4 of the present application.

As one embodiment, the first transmitter A02 comprises at least the first five of an antenna 452, a transmitting device 454, a multi-antenna transmitting device processor 457, a transmitting processor 468, a controller/processor 459, a memory 460, and a data source 467 in FIG. 4 of the present application.

As one embodiment, the first transmitter A02 comprises at least the first four of an antenna 452, a transmitting device 454, a multi-antenna transmitting device processor 457, a transmitting processor 468, a controller/processor 459, a memory 460, and a data source 467 in FIG. 4 of the present application.

As one embodiment, the first transmitter A02 comprises at least the first three of an antenna 452, a transmitting device 454, a multi-antenna transmitting device processor 457, a transmitting processor 468, a controller/processor 459, a memory 460, and a data source 467 in FIG. 4 of the present application.

As one embodiment, the first transmitter A02 comprises at least the first two of an antenna 452, a transmitting device 454, a multi-antenna transmitting device processor 457, a transmitting processor 468, a controller/processor 459, a memory 460, and a data source 467 in FIG. 4 of the present application.

As one embodiment, the first receiver A01 receives first RRC signaling and a first information block, wherein the symbol type corresponding to at least one symbol other than the symbol indicated as an uplink symbol by the first RRC signaling depends on the first information block; and the first transmitter A02 sends a first random access preamble in each of a plurality of PRACH occasions, wherein all of the plurality of PRACH occasions only occupy symbols of the same symbol type among various symbol types in a time domain, the various symbol types at least comprise a first symbol type, and at least one symbol of the first symbol type is indicated by the first RRC signaling as a downlink symbol, but can be used for uplink transmission.

As one embodiment, at least one symbol of the first symbol type is indicated by the first RRC signaling as a downlink symbol and configured by the first information block to be available for uplink transmission.

As one embodiment, the various symbol types further comprise a second symbol type, and at least one symbol of the second symbol type is indicated by the first RRC signaling as an uplink symbol; and the symbol indicated as the uplink symbol by the first RRC signaling is not a symbol of the first symbol type.

As one embodiment, the first RRC signaling is tdd-UL-DL-ConfigurationCommon.

As one embodiment, all of the plurality of PRACH occasions only occupy symbols of the first symbol type in a time domain.

As one embodiment, the first receiver A01 receives a second information block, wherein the second information block is used for configuring a first PRACH occasion group, and the plurality of PRACH occasions all belong to the first PRACH occasion group.

As one embodiment, a first-type PRACH occasion and a second-type PRACH occasion are both associated with a first SS/PBCH block index, and the first-type PRACH occasion and the second-type PRACH occasion respectively occupy symbols of different symbol types among the various symbol types; the first-type PRACH occasion and the second-type PRACH occasion are configured to form a plurality of PRACH occasion groups, and each of the plurality of PRACH occasion groups comprises only one or a plurality of first-type PRACH occasions or comprises only one or a plurality of second-type PRACH occasions; and the first PRACH occasion group is one of the plurality of PRACH occasion groups.

### Embodiment 12

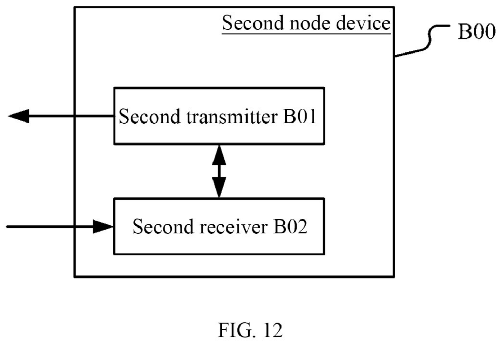

Embodiment 12 illustrates a structural block diagram of a processing device in a second node device, as shown in FIG. 12. In FIG. 12, the processing device B00 of the second node device comprises a second transmitter B01 and a second receiver B02.

As one embodiment, the second node device B00 is a base station.

As one embodiment, the second node device B00 is a satellite device.

As one embodiment, the second node device B00 is a relay node.

As one embodiment, the second node device B00 is a base station supporting full-duplex operations.

As one embodiment, the second node device B00 is a base station only supporting half-duplex operations.

As one embodiment, the second node device B00 is one of a test device, test equipment, and a test instrument.

As one embodiment, the second transmitter B01 comprises at least one of an antenna 420, a transmitting device 418, a multi-antenna transmitting processor 471, a transmitting processor 416, a controller/processor 475, and a memory 476 in FIG. 4 of the present application.

As one embodiment, the second transmitter B01 comprises at least the first five of an antenna 420, a transmitting device 418, a multi-antenna transmitting processor 471, a transmitting processor 416, a controller/processor 475, and a memory 476 in FIG. 4 of the present application.

As one embodiment, the second transmitter B01 comprises at least the first four of an antenna 420, a transmitting device 418, a multi-antenna transmitting processor 471, a transmitting processor 416, a controller/processor 475, and a memory 476 in FIG. 4 of the present application.

As one embodiment, the second transmitter B01 comprises at least the first three of an antenna 420, a transmitting device 418, a multi-antenna transmitting processor 471, a transmitting processor 416, a controller/processor 475, and a memory 476 in FIG. 4 of the present application.

As one embodiment, the second transmitter B01 comprises at least the first two of an antenna 420, a transmitting device 418, a multi-antenna transmitting processor 471, a transmitting processor 416, a controller/processor 475, and a memory 476 in FIG. 4 of the present application.

As one embodiment, the second receiver B02 comprises at least one of an antenna 420, a receiving device 418, a multi-antenna receiving processor 472, a receiving processor 470, a controller/processor 475, and a memory 476 in FIG. 4 of the present application.

As one embodiment, the second receiver B02 comprises at least the first five of an antenna 420, a receiving device 418, a multi-antenna receiving processor 472, a receiving processor 470, a controller/processor 475, and a memory 476 in FIG. 4 of the present application.

As one embodiment, the second receiver B02 comprises at least the first four of an antenna 420, a receiving device 418, a multi-antenna receiving processor 472, a receiving processor 470, a controller/processor 475, and a memory 476 in FIG. 4 of the present application.

As one embodiment, the second receiver B02 comprises at least the first three of an antenna 420, a receiving device 418, a multi-antenna receiving processor 472, a receiving processor 470, a controller/processor 475, and a memory 476 in FIG. 4 of the present application.

As one embodiment, the second receiver B02 comprises at least the first two of an antenna 420, a receiving device 418, a multi-antenna receiving processor 472, a receiving processor 470, a controller/processor 475, and a memory 476 in FIG. 4 of the present application.

As one embodiment, the second transmitter B01 sends first RRC signaling and a first information block, wherein the symbol type corresponding to at least one symbol other than the symbol indicated as an uplink symbol by the first RRC signaling depends on the first information block; and the second receiver B02 receives a first random access preamble in each of a plurality of PRACH occasions, wherein all of the plurality of PRACH occasions only occupy symbols of the same symbol type among various symbol types in a time domain, the various symbol types at least comprise a first symbol type, and at least one symbol of the first symbol type is indicated by the first RRC signaling as a downlink symbol, but can be used for uplink transmission.

As one embodiment, at least one symbol of the first symbol type is indicated by the first RRC signaling as a downlink symbol and configured by the first information block to be available for uplink transmission.

As one embodiment, the various symbol types further comprise a second symbol type, and at least one symbol of the second symbol type is indicated by the first RRC signaling as an uplink symbol; and the symbol indicated as the uplink symbol by the first RRC signaling is not a symbol of the first symbol type.

As one embodiment, the first RRC signaling is tdd-UL-DL-ConfigurationCommon.

As one embodiment, all of the plurality of PRACH occasions only occupy symbols of the first symbol type in a time domain.

As one embodiment, the second transmitter B01 sends a second information block, wherein the second information block is used for configuring a first PRACH occasion group, and the plurality of PRACH occasions all belong to the first PRACH occasion group.

As one embodiment, a first-type PRACH occasion and a second-type PRACH occasion are both associated with a first SS/PBCH block index, and the first-type PRACH occasion and the second-type PRACH occasion respectively occupy symbols of different symbol types among the various symbol types; the first-type PRACH occasion and the second-type PRACH occasion are configured to form a plurality of PRACH occasion groups, and each of the plurality of PRACH occasion groups comprises only one or a plurality of first-type PRACH occasions or comprises only one or a plurality of second-type PRACH occasions; and the first PRACH occasion group is one of the plurality of PRACH occasion groups.

Those of ordinary skill in the art can understand that all or parts of the steps in the above method can be completed by instructing relevant hardware through a program, and the program can be stored in a computer-readable storage medium, such as a read-only memory, a hard disk or an optical disk. Optionally, all or parts of the steps in the above embodiments can also be implemented using one or more integrated circuits. Accordingly, each module unit in the above embodiments can be implemented in the form of hardware or in the form of a software function module. The present application is not limited to any specific form of software and hardware combinations. The first node device in the present application comprises but is not limited to mobile phones, tablet computers, notebook computers, network access cards, low-power-consumption devices, eMTC devices, NB-IoT devices, vehicle-mounted communication devices, aircrafts, airplanes, drones, remote-controlled aircrafts and other wireless communication devices. The second node device in the present application comprises but is not limited to mobile phones, tablet computers, notebook computers, network access cards, low-power-consumption devices, eMTC devices, NB-IoT devices, vehicle-mounted communication devices, aircrafts, airplanes, drones, remote-controlled aircrafts and other wireless communication devices. The user equipment or UE or terminal in the present application comprises but is not limited to mobile phones, tablet computers, notebook computers, network access cards, low-power-consumption devices, eMTC devices, NB-IoT devices, vehicle-mounted communication devices, aircrafts, airplanes, drones, remote-controlled aircrafts and other wireless communication devices. The base station device or base station or network-side device in the present application comprises but is not limited to macrocellular base stations, microcell base stations, femtocells, relay base stations, eNBs, gNBs, transmitter receiver points (TRPs), GNSS, relay satellites, satellite base stations, air base stations, test devices, test equipment, test instruments and other devices.

Those skilled in the art should understand that the present invention can be implemented in other specified forms without departing from its core or basic features. Therefore, the embodiments disclosed at present should be regarded as descriptive rather than restrictive in any way. The scope of the present invention is determined by the appended claims rather than the foregoing description, and all modifications within their equivalent meanings and areas are considered to be comprised therein.

## Claims

1. A first node used for wireless communication, comprising:
a first receiver, which receives first RRC signaling and a first information block, wherein a symbol type corresponding to at least one symbol other than a symbol indicated as an uplink symbol by the first RRC signaling depends on the first information block; and
a first transmitter, which sends a first random access preamble in each of a plurality of PRACH occasions,
wherein all of the plurality of PRACH occasions only occupy symbols of the same symbol type among various symbol types in a time domain, the various symbol types at least comprise a first symbol type, and at least one symbol of the first symbol type is indicated by the first RRC signaling as a downlink symbol, but can be used for uplink transmission.

2. The first node according to claim 1, wherein at least one symbol of the first symbol type is indicated by the first RRC signaling as a downlink symbol and configured by the first information block to be available for uplink transmission.

3. The first node according to claim 1 or 2, wherein the various symbol types further comprise a second symbol type, and at least one symbol of the second symbol type is indicated as an uplink symbol by the first RRC signaling; and the symbol indicated as the uplink symbol by the first RRC signaling is not a symbol of the first symbol type.

4. The first node according to any one of claims 1 to 3, wherein the first RRC signaling comprises tdd-UL-DL-ConfigurationCommon.

5. The first node according to any one of claims 1 to 4, wherein all of the plurality of PRACH occasions only occupy symbols of the first symbol type in a time domain.

6. The first node according to any one of claims 1 to 5, comprising:
the first receiver, which receives a second information block,
wherein the second information block is used for configuring a first PRACH occasion group, and the plurality of PRACH occasions all belong to the first PRACH occasion group.

7. The first node according to claim 6, wherein a first-type PRACH occasion and a second-type PRACH occasion are both associated with a first SS/PBCH block index, and the first-type PRACH occasion and the second-type PRACH occasion respectively occupy symbols of different symbol types among the various symbol types; the first-type PRACH occasion and the second-type PRACH occasion are configured to form a plurality of PRACH occasion groups, and each of the plurality of PRACH occasion groups comprises only one or a plurality of first-type PRACH occasions or comprises only one or a plurality of second-type PRACH occasions; and the first PRACH occasion group is one of the plurality of PRACH occasion groups.

8. A second node used for wireless communication, comprising:
a second transmitter, which sends first RRC signaling and a first information block, wherein a symbol type corresponding to at least one symbol other than a symbol indicated as an uplink symbol by the first RRC signaling depends on the first information block; and
a second receiver, which receives a first random access preamble in each of a plurality of PRACH occasions,
wherein all of the plurality of PRACH occasions only occupy symbols of the same symbol type among various symbol types in a time domain, the various symbol types at least comprise a first symbol type, and at least one symbol of the first symbol type is indicated by the first RRC signaling as a downlink symbol, but can be used for uplink transmission.

9. The second node according to claim 8, wherein at least one symbol of the first symbol type is indicated by the first RRC signaling as a downlink symbol and configured by the first information block to be available for uplink transmission.

10. The second node according to claim 8 or 9, wherein the various symbol types further comprise a second symbol type, and at least one symbol of the second symbol type is indicated as an uplink symbol by the first RRC signaling; and the symbol indicated as the uplink symbol by the first RRC signaling is not a symbol of the first symbol type.

11. The second node according to any one of claims 8 to 10, wherein the first RRC signaling comprises tdd-UL-DL-ConfigurationCommon.

12. The second node according to any one of claims 8 to 11, wherein all of the plurality of PRACH occasions only occupy symbols of the first symbol type in a time domain.

13. The second node according to any one of claims 8 to 12, comprising:
the second transmitter, which sends a second information block,
wherein the second information block is used for configuring a first PRACH occasion group, and the plurality of PRACH occasions all belong to the first PRACH occasion group.

14. The second node according to claim 13, wherein a first-type PRACH occasion and a second-type PRACH occasion are both associated with a first SS/PBCH block index, and the first-type PRACH occasion and the second-type PRACH occasion respectively occupy symbols of different symbol types among the various symbol types; the first-type PRACH occasion and the second-type PRACH occasion are configured to form a plurality of PRACH occasion groups, and each of the plurality of PRACH occasion groups comprises only one or a plurality of first-type PRACH occasions or comprises only one or a plurality of second-type PRACH occasions; and the first PRACH occasion group is one of the plurality of PRACH occasion groups.

15. A method used in a first node for wireless communication, comprising:
receiving first RRC signaling and a first information block, wherein a symbol type corresponding to at least one symbol other than a symbol indicated as an uplink symbol by the first RRC signaling depends on the first information block; and
sending a first random access preamble in each of a plurality of PRACH occasions,
wherein all of the plurality of PRACH occasions only occupy symbols of the same symbol type among various symbol types in a time domain, the various symbol types at least comprise a first symbol type, and at least one symbol of the first symbol type is indicated by the first RRC signaling as a downlink symbol, but can be used for uplink transmission.

16. The method used in a first node according to claim 15, wherein at least one symbol of the first symbol type is indicated by the first RRC signaling as a downlink symbol and configured by the first information block to be available for uplink transmission.

17. The method used in a first node according to claim 15 or 16, wherein the various symbol types further comprise a second symbol type, and at least one symbol of the second symbol type is indicated as an uplink symbol by the first RRC signaling; and the symbol indicated as the uplink symbol by the first RRC signaling is not a symbol of the first symbol type.

18. The method used in a first node according to any one of claims 15 to 17, wherein the first RRC signaling comprises tdd-UL-DL-ConfigurationCommon.

19. The method used in a first node according to any one of claims 15 to 18, wherein all of the plurality of PRACH occasions only occupy symbols of the first symbol type in a time domain.

20. The method used in a first node according to any one of claims 15 to 19, comprising:
receiving a second information block,
wherein the second information block is used for configuring a first PRACH occasion group, and the plurality of PRACH occasions all belong to the first PRACH occasion group.

21. The method used in a first node according to claim 20, wherein a first-type PRACH occasion and a second-type PRACH occasion are both associated with a first SS/PBCH block index, and the first-type PRACH occasion and the second-type PRACH occasion respectively occupy symbols of different symbol types among the various symbol types; the first-type PRACH occasion and the second-type PRACH occasion are configured to form a plurality of PRACH occasion groups, and each of the plurality of PRACH occasion groups comprises only one or a plurality of first-type PRACH occasions or comprises only one or a plurality of second-type PRACH occasions; and the first PRACH occasion group is one of the plurality of PRACH occasion groups.

22. A method used in a second node for wireless communication, comprising:
sending first RRC signaling and a first information block, wherein a symbol type corresponding to at least one symbol other than a symbol indicated as an uplink symbol by the first RRC signaling depends on the first information block; and
receiving a first random access preamble in each of a plurality of PRACH occasions,
wherein all of the plurality of PRACH occasions only occupy symbols of the same symbol type among various symbol types in a time domain, the various symbol types at least comprise a first symbol type, and at least one symbol of the first symbol type is indicated by the first RRC signaling as a downlink symbol, but can be used for uplink transmission.

23. The method used in a second node according to claim 22, wherein at least one symbol of the first symbol type is indicated by the first RRC signaling as a downlink symbol and configured by the first information block to be available for uplink transmission.

24. The method used in a second node according to claim 22 or 23, wherein the various symbol types further comprise a second symbol type, and at least one symbol of the second symbol type is indicated as an uplink symbol by the first RRC signaling; and the symbol indicated as the uplink symbol by the first RRC signaling is not a symbol of the first symbol type.

25. The method used in a second node according to any one of claims 22 to 24, wherein the first RRC signaling comprises tdd-UL-DL-ConfigurationCommon.

26. The method used in a second node according to any one of claims 22 to 25, wherein all of the plurality of PRACH occasions only occupy symbols of the first symbol type in a time domain.

27. The method used in a second node according to any one of claims 22 to 26, comprising:
sending a second information block,
wherein the second information block is used for configuring a first PRACH occasion group, and the plurality of PRACH occasions all belong to the first PRACH occasion group.

28. The method used in a second node according to claim 27, wherein a first-type PRACH occasion and a second-type PRACH occasion are both associated with a first SS/PBCH block index, and the first-type PRACH occasion and the second-type PRACH occasion respectively occupy symbols of different symbol types among the various symbol types; the first-type PRACH occasion and the second-type PRACH occasion are configured to form a plurality of PRACH occasion groups, and each of the plurality of PRACH occasion groups comprises only one or a plurality of first-type PRACH occasions or comprises only one or a plurality of second-type PRACH occasions; and the first PRACH occasion group is one of the plurality of PRACH occasion groups.
